# FASCICULE DE BREVET EUROPEEN

(11) **EP 1 929 140 B1**
(45) Date de publication et mention de la délivrance du brevet: **31.10.2012**
(21) Numéro de dépôt: 06793823.3
(22) Date de dépôt: 26.09.2006
(51) Int. Cl.: B64D 27/26

(54) **ATTACHE ARRIÈRE D'UN MOTEUR D'AÉRONEF À DEUX MANILLES**
HECKBEFESTIGUNG MIT ZWEI BÜGELN FÜR FLUGZEUGTRIEBWERK
TWO-SHACKLE AIRCRAFT ENGINE REAR ATTACHMENT

(30) Priorité: 28.09.2005 FR 0552935
(43) Date de publication de la demande: 11.06.2008
(73) Titulaire: AIRBUS OPERATIONS, 31060 Toulouse (FR)
(72) Inventeur: AUDART-NOEL, Virginie, F-32600 Pujaudran (FR); CANADAS, Marc, F-31200 Toulouse (FR)
(74) Mandataire: Ilgart, Jean-Christophe
(86) Numéro de dépôt international: PCT/EP2006/066728
(87) Numéro de publication internationale: WO 2007/036515

(56) Documents cités:
- EP-A- 0 997 653
- EP-A- 1 231 138
- EP-A- 1 281 615
- EP-A- 1 481 896
- EP-A- 1 535 838
- EP-A1- 0 357 504
- EP-A1- 1 535 839
- US-A- 4 786 202

## Description

### DOMAINE TECHNIQUE

La présente invention se rapporte de façon générale à l'accrochage d'un moteur d'aéronef à un mât d'accrochage, également appelé EMS (de l'anglais *« Engine Mounting Structure* »), permettant de suspendre par exemple un turboréacteur au-dessous de la voilure de l'aéronef, ou de monter le turboréacteur au-dessus de la voilure.

L'invention concerne plus particulièrement une nouvelle attache arrière de moteur comprenant deux manilles seulement et assurant sa fonction de sécurité intrinsèque, couramment dénommée « *Fail Safe* », par une structure doublée.

### ÉTAT DE LA TECHNIQUE ANTÉRIEURE

Dans les aéronefs, un mât d'accrochage est prévu pour constituer l'interface de liaison entre un moteur tel qu'un turboréacteur et une voilure de l'aéronef. Il permet de transmettre à la structure de l'aéronef les efforts générés par son turboréacteur associé, et autorise également le cheminement du carburant, de l'air, des systèmes électriques, et hydrauliques, ... entre le moteur et l'aéronef.

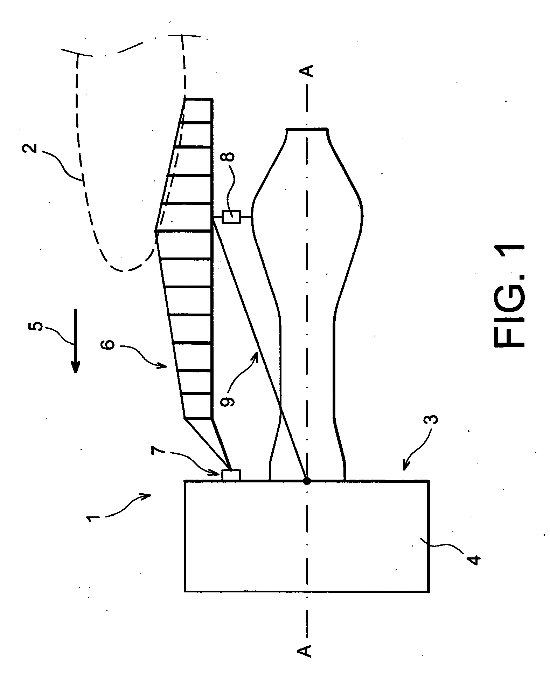

Ainsi, tel qu'illustré sur la figure 1, un ensemble moteur 1 pour aéronef est destiné à être fixé sous une aile 2 de l'aéronef, et comporte un moteur tel qu'un turboréacteur 3 s'étendant le long d'un axe AA, et comprenant le carter de soufflante 4 à l'avant, qui délimite un canal annulaire de soufflante, puis le carter du coeur de turboréacteur et le carter d'éjection.

Dans toute la description qui va suivre, par convention, les termes « avant » et « arrière » se réfèrent à une direction d'avancement de l'aéronef suite à la poussée exercée par le turboréacteur 3, cette direction étant représentée schématiquement par la flèche 5. A titre indicatif, il est noté que l'ensemble 1 est destiné à être entouré d'une nacelle (non représentée).

L'ensemble moteur 1 comprend par ailleurs un mât d'accrochage 6, élément longitudinal s'étendant le long d'une direction principale parallèle à l'axe AA, ou légèrement inclinée par rapport à elle. Afin d'assurer la transmission des efforts, le mât 6 comporte habituellement une structure rigide, souvent du type « caisson », c'est-à-dire comprenant des arêtes composées d'éléments sous forme de barres et reliées par des panneaux.

La structure rigide du mât 6 supporte un système de montage 7, 8, 9 afin d'y solidariser le turboréacteur 3 ; ce système comporte au moins deux attaches moteur, généralement au moins une attache avant 7 et au moins une attache arrière 8 ; de plus, le système de montage comprend un dispositif 9 de reprise des efforts de poussée générés par le turboréacteur 3, par exemple sous la forme de deux bielles latérales raccordées d'une part à une partie arrière du carter de soufflante 4 du turboréacteur 3, et d'autre part à un point d'attache localisé entre attaches avant 7 et arrière 8. Un autre système d'attaches (non représenté) permet d'assurer la suspension de cet ensemble 1 sous la voilure 2 de l'aéronef.

Classiquement, l'attache arrière 8 de moteur permet en particulier de reprendre les déplacements latéraux, verticaux, et de torsion du moteur 3 ; par ailleurs, les conditions de sécurité imposent des redondances de fixation. Ainsi, une attache arrière comprend de façon usuelle une poutre d'accrochage et deux manilles trois points, ainsi qu'une manille deux points : voir par exemple le document US 6 330 995.

Il apparaît cependant que la présence de la manille deux points alourdit le dispositif, ce qui est un souci permanent dans le domaine de l'aéronautique, et que l'écartement entre mât et moteur doit rester dans des dimensions limitées par la conception d'ensembles moteurs.

Le document EP 1 481 896 concerne l'attache d'un moteur à un mât d'avion avec deux liaisons deux points, cette attache étant effectuée par l'intermédiaire de deux bielles 16, 18 avec une fonction *Fail Safe* par l'intermédiaire de deux liaisons dormantes 167, 187 qui ne sont sollicitées qu'en cas de défaillance de l'une des deux autres fixations 164, 184.

### EXPOSÉ DE L'INVENTION

L'invention propose une nouvelle structure pour l'attache arrière du moteur sur le mât

d'accrochage d'un aéronef, permettant d'alléger le dispositif tout en conservant ses propriétés de sécurité intrinsèque.

Sous un de ses aspects, l'invention propose ainsi une attache moteur comprenant un premier dispositif, ou poutre, destiné à être solidarisé au mât d'accrochage, et deux manilles trois points, c'est-à-dire des ferrures triangulaires. La poutre comprend une chape munie de deux branches en U entre lesquelles chaque manille peut être insérée. Chaque branche de la chape comprend quatre orifices d'ancrage face à face, de préférence seulement quatre trous, si possible alignés, qui correspondent à deux orifices de chaque manille ; chaque manille comprend en outre un troisième orifice d'ancrage destiné à être solidarisé à une chape du côté moteur. Avantageusement, le triangle formé par les trois orifices de chaque manille est isocèle.

Le montage de l'attache moteur comprend l'utilisation d'axes de liaison, de préférence rotulés, de façon à solidariser les deux manilles par les quatre points d'ancrage de la poutre ; deux axes de liaison, de préférence doublés, rotulés et avec jeu radial, sont utilisés pour solidariser l'attache moteur à une chape, elle aussi avantageusement doublée, du moteur.

Selon l'invention, chaque manille est de structure duale, et comprend deux parties, avantageusement d'épaisseur identique, triangulaires et comprenant les trois orifices d'ancrage, accolées, c'est-à-dire juxtaposées, l'une à l'autre dans le sens du plan de montage.

Sous un autre aspect, l'invention se rapporte à un ensemble moteur dans lequel l'attache arrière de moteur est composée d'une attache à structure de manilles duales selon l'invention.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1, déjà décrite, représente une vue schématique latérale d'un ensemble moteur partiel pour aéronef.
La figure 2 montre une attache de moteur selon un mode de réalisation préféré de l'invention.
Les figures 3A et 3B illustrent des axes de liaison d'une attache moteur selon l'invention.

### EXPOSÉ DÉTAILLÉ DE MODES DE RÉALISATION PARTICULIERS

Tel qu'il est connu, et afin de ne pas devoir modifier toute la conception de l'ensemble moteur, l'attache arrière selon l'invention repose sur le principe de la solidarisation par trois points sur le mât et deux points sur le moteur afin de reprendre les efforts verticaux, latéraux et de torsion du moteur ; l'attache selon l'ïnvention est de préférence de conception symétrique.

Par ailleurs, les modifications selon l'invention sont telles que les propriétés « *Fail Safe* » de sécurité intrinsèque de l'accrochage du moteur ne sont pas altérées ; en particulier, une défaillance dans l'un des éléments d'accrochage reste compensée par la présence d'un autre élément. En effet, la fonction primordiale du mât dans le fonctionnement de l'avion impose des critères stricts de fiabilité.

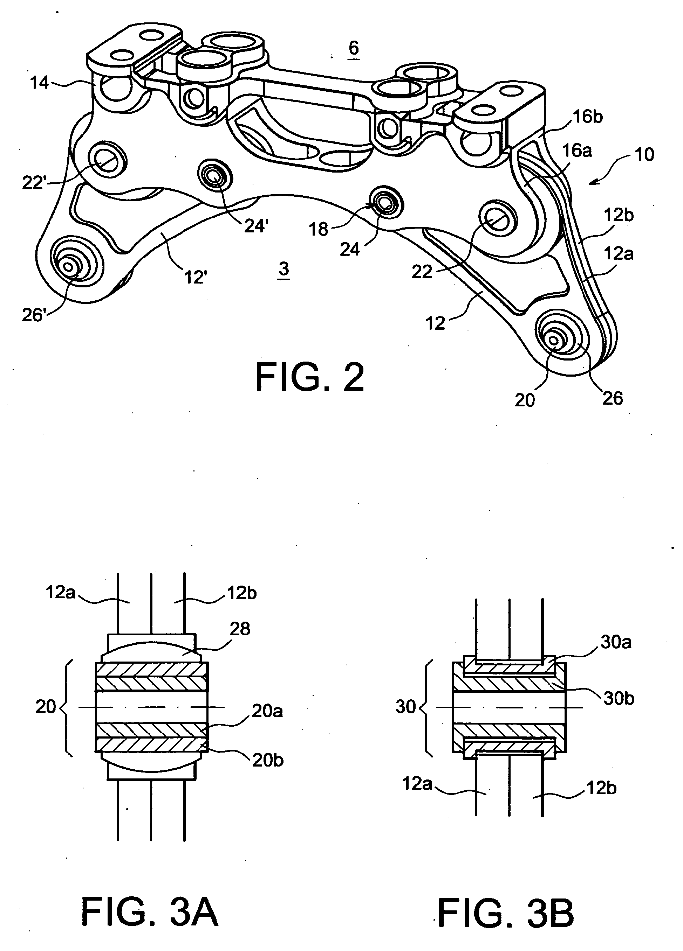

Tel qu'illustré sur la figure 2, l'attache 10 selon l'invention est du type « à double boomerang » orthogonal, ou quasi-orthogonal, à l'axe AA du moteur 3, c'est-à-dire qu'elle comprend deux ferrures 12, 12' sensiblement triangulaires, ou manilles trois points, définissant un plan radial de montage sensiblement normal à l'axe AA. Les manilles 12, 12' permettent chacune l'accrochage en un point du côté du moteur 3 et deux points du côté mât 6, l'un des quatre points d'ancrage du côté mât 6 n'étant pas sollicité en fonctionnement normal mais permettant de compenser une éventuelle défaillance de l'un des trois autres points. De préférence, les deux manilles 12, 12' sont de forme et nature similaires, de fait symétriques en miroir par rapport à un plan normal au plan de montage et comprenant l'axe AA du moteur 3.

L'accrochage selon l'invention se fait par l'intermédiaire d'une poutre 14, solidarisée au mât 6 ou en faisant partie intégrante, permettant l'assemblage des manilles. La poutre 14 comprend une chape en forme de U avec deux branches 16a, 16b entre lesquelles les ferrures 12, 12' peuvent être insérées à des fins de fixation ; de préférence, l'ajustement entre les ferrures 12, 12' et l'écartement des branches 16a, 16b est déterminé par la rotation des manilles devant rester libres pour accommoder les déplacements axiaux du moteur (dus par exemple à la dilatation thermique). De fait, la poutre 14 est de conception usuelle : en particulier, sa forme, ses dimensions, sa composition sont adaptées et modélisées tel qu'il est connu en fonction du moteur 3, du mât 6 et du type de l'aéronef.

La solidarisation entre poutre 14 et manilles 12, 12' est effectuée par l'intermédiaire d'axes 18, de préférence rotulés, insérés dans des orifices coopérant de chacun des éléments 12, 12', 16. De même, les manilles 12, 12' sont couplées à des chapes (non illustrées) du côté moteur 3 par des axes de liaison 20 avec possibilité de liaison rotulée.

Au vu de la configuration détaillée plus haut, chaque manille 12, 12' comporte donc trois orifices localisés au niveau des trois coins de chaque triangle. Les manilles 12, 12' comportent ainsi chacune un premier orifice 22 servant d'ancrage extérieur à la poutre 14 ; à partir de ce premier orifice 22, un premier bras est défini le long de la chape 16 de la poutre 14 vers un deuxième orifice 24 d'ancrage sur la poutre 14 et un deuxième bras s'écarte de la poutre 14 vers un troisième orifice 26 qui sera solidarisé à une chape du moteur 3. La longueur des deuxièmes bras est adaptée à l'écartement entre moteur 3 et mât 6.

La poutre 14 comporte ainsi en regard quatre orifices pour les premiers 22, 22' et deuxièmes 24, 24' points d'ancrage. De préférence, les quatre orifices d'ancrage de la poutre 14 sont alignés pour des raisons d'isostatique ; ces quatre orifices d'ancrage sont de préférence les seuls orifices présents sur les branches 16a, 16b.

Tel qu'il est usuel, en fonctionnement normal, la première manille 12 et le deuxième bras de la seconde manille 12' fonctionnent pour reprendre les efforts verticaux, latéraux et de torsion du moteur 3 : l'un des deuxièmes orifices 24' n'est pas sollicité et reste « en attente », les cinq autres supportant toute la charge ; l'orifice en attente 24' est engagé en cas d'une éventuelle rupture d'un axe de fixation 18, ou d'une défaillance d'une branche de la chape 16a, 16b de la poutre 14 à ce niveau (l'orifice non sollicité peut bien entendu également être un premier orifice 22).

Par ailleurs, selon l'invention, chaque manille 12, 12' est conçue selon une structure duale, c'est-à-dire que la ferrure 12 est fabriquée en deux parties 12a, 12b accolées selon le plan radial de montage, c'est-à-dire placées côte à côte ; les deux parties 12a, 12b forment de fait deux demi manilles, dimensionnées comme les manilles 12, 12' à l'exception de leur épaisseur, qui est avantageusement identique pour chacune des deux parties. La solidarisation entre les deux demi manilles 12a, 12b peut être effectuée par exemple par rivetage ou vissage ; cependant, de façon préférée, le serrage effectué par les axes de fixation 18, 20 (c'est-à-dire par les écrous des rotules logées dans les alésages des manilles - non schématisé), voire de plus au niveau des branches 16a, 16b et des chapes moteur permet d'assurer l'absence de mouvement relatif entre les deux éléments 12a, 12b, auquel cas les deux parties de chaque manille 12, 12' peuvent être juxtaposées, sans autre moyen de solidarisation.

Une éventuelle rupture d'une manille 12, 12' est donc couverte par sa redondance : si l'un des éléments 12a, 12b subit un problème, l'autre reprend les efforts complets et permet d'assurer la fonction correspondante. Le dimensionnement des épaisseurs des demi manilles 12a, 12b est bien entendu approprié.

De même, il est préférable que les chapes côté moteur, non illustrées, soient elles aussi doublées, afin de compenser leur éventuelle rupture.

Enfin, selon l'invention, au niveau des troisièmes orifices 26, 26', il est prévu que les axes de fixation 20 soient eux aussi doublés, afin de couvrir leur éventuelle rupture.

Deux configurations d'axes de liaison doublés 20 sont possibles : selon la première option, de façon similaire à la structure duale des manilles 12, 12' précédemment décrite, l'axe de liaison 20 est formé de deux couches cylindriques 20a, 20b travaillant sans jeu, tel qu'illustré sur la figure 3A. Avantageusement, seul l'axe de liaison 20 est doublé ; une rotule simple 28 peut ainsi être par exemple localisée dans une cage adaptée. Il est à noter que cette configuration nécessite de prendre en compte, dans le calcul des dimensions, le fait que chaque partie 20a, 20b de l'axe 20 travaille et est sollicitée en fatigue lors du fonctionnement normal.

Une autre option est illustrée en figure 3B, dans laquelle la rotule n'est pas représentée. L'axe 30 présente une configuration avec jeu radial entre les deux parties 30a, 30b de l'axe, de sorte que seul l'axe extérieur 30b travaille en fonctionnement normal. Des moyens de serrage empêchent cependant tout jeu axial entre les deux parties. Ici encore, les axes 30 sont dimensionnés pour les charges à supporter.

Outre les avantages susmentionnés, il est à noter que la configuration selon l'invention permet d'accommoder une hauteur conséquente entre les points d'accrochage 22, 26 et donc un écartement entre moteur 3 et mât 6 supérieur aux attaches actuellement existantes. De plus, le nombre de pièces dans l'attache 10 est limité, avec gains de poids afférents.

En outre, grâce à la suppression du cinquième point d'ancrage au niveau du mât 6, il est possible de modifier les distances entre les premiers et deuxièmes orifices de façon plus libre. De fait, pour une manille trois points 12, la répartition de charge optimale est obtenue pour une distance entre les orifices 22, 24 du premier bras identique à la distance entre les orifices 22, 26 du bras opposé, c'est-à-dire pour un triangle isocèle formé par les trois orifices. Grâce à la configuration selon l'invention, il est possible d'écarter les orifices 22, 24 du premier bras en fonction de l'écartement mât-moteur (c'est-à-dire en fonction de la taille imposée du deuxième bras) afin d'atteindre cet objectif.

Ces avantages supplémentaires sont obtenus sans réduction de la sécurité étant donné que les ruptures de chape moteur, d'axes moteur et de manilles sont couverts par leur redondance, et les ruptures d'axes poutre et de chape poutre sont couvertes par l'engagement de l'axe en attente, le transfert des efforts entre les manilles étant de plus très « propre ».

## Revendications

1. Attache moteur (10) pour aéronef destinée à être interposée entre un moteur (3) et un mât d'accrochage (6) de ce moteur comprenant un premier dispositif de fixation (14) destiné à être solidarisé au mât (6) et pourvu de deux branches (16a, 16b) munies chacune de quatre orifices d'ancrage en vis-à-vis, et deux manilles (12, 12'), les deux manilles comprenant chacune trois orifices, deux des orifices (22, 24) de chaque manille (12) étant destinés à être raccordés par des axes de liaison (18) au premier dispositif de fixation (14) par l'intermédiaire de ses orifices d'ancrage, et le troisième orifice (26) étant destiné à être solidarisé au niveau d'une chape moteur, l'un des orifices (24') destiné à être raccordé au premier dispositif de fixation (14) n'étant pas sollicité tandis que les cinq autres orifices supportent toute la charge en fonctionnement normal , chaque manille (12, 12') étant de structure duale composée de deux parties (12a, 12b) de forme identique accolées l'une à l'autre dans un sens orthogonal aux orifices (22, 24, 26).

2. Attache selon la revendication 1 dans laquelle chaque branche (16a, 16b) du premier dispositif (14) ne comprend que quatre orifices.

3. Attache selon l'une des revendications 1 à 2 dans laquelle les quatre orifices de chaque branche (16a, 16b) du premier dispositif (14) sont alignés.

4. Attache selon l'une des revendications 1 à 3 dans laquelle le triangle formé par les trois orifices (22, 24, 26) de chaque manille est isocèle.

5. Attache selon l'une des revendications 1 à 4 comprenant en outre quatre axes de liaison (18) solidarisant les deux manilles (12, 12') entre les branches (16a, 16b) du premier dispositif (14).

6. Attache selon l'une des revendications 1 à 5 comprenant en outre des axes de liaison (20, 30) coopérant avec les troisièmes orifices (26).

7. Attache selon la revendication 6 dans laquelle les axes de liaison (20) coopérant avec les troisièmes orifices (26) sont de structure duale comportant deux parties (20a, 20b) coaxiales.

8. Attache selon la revendication 7 dans laquelle les axes de liaison de structure duale (30) comprennent un jeu radial entre les deux parties (30a, 30b).

9. Attache selon l'une des revendications 5 à 8 dans laquelle les axes de liaison (18, 20, 30) sont rotulés.

10. Ensemble moteur d'un aéronef comprenant un mât d'accrochage (6), un moteur (3) solidarisé au mât (6) par l'intermédiaire d'une attache arrière (10) selon l'une des revendications 5 à 9.

11. Ensemble moteur selon la revendication 10 dans lequel l'attache arrière (10) est solidarisée au moteur (3) par l'intermédiaire de chapes doublées.

## Claims

1. An aircraft engine attachment (10) intended to be positioned between an engine (3) and a pylon (6) for this engine, comprising a first securing device (14) intended to be secured to the pylon (6) and provided with two branches (16a, 16b) each having four opposite-facing anchor orifices, and two shackles (12, 12'), the two schackles comprising three orifices, two of the orifices (22, 24) of each schackle (12) being intended to be connected by link pins (18) to the first securing device (14) via its anchor orifices, and the third orifice (26) being intended to be secured at an engine clevis, one of the orifices (24') intended to be connected to the first securing device (14) being not stressed whereas the five other orifices support the complete load in normal operation, each schackle being of dual structure with two parts (12a, 12b) of identical shape lying adjacent one another in a direction orthogonal to the orifices (22, 24, 26).

2. The attachment according to claim 1, wherein each branch (16a, 16b) of the first device (14) only has four orifices.

3. The attachment according to either of claims 1 to 2, wherein the four orifices of each branch (16a, 16b) of the first device (14) are aligned.

4. The attachment according to any of claims 1 to 3, wherein the triangle formed by the three orifices (22, 24, 26) of each schackle is an isosceles triangle.

5. The attachment according to any of claims 1 to 4 also comprising four link pins (18) securing the two schackles (12, 12') between the branches (16a, 16b) of the first device (14).

6. The attachment according to any of claims 1 to 5 also comprising link pins (20, 30) cooperating with the third orifices (26).

7. The attachment according to claim 6, wherein the link pins (20) cooperating with the third orifices (26) are of dual structure comprising two coaxial parts (20a, 20b).

8. The attachment according to claim 7, wherein the link pins of dual structure (30) have a radial clearance between the two parts (30a, 30b).

9. The attachment according to any of claims 5 to 8, wherein the link pins (18, 20, 30) are ball-jointed.

10. An aircraft engine assembly comprising an engine mount (6), an engine (3) secured to the mount (6) via an aft attachment (10) according to any of claims 5 to 9.

11. An engine assembly according to claim 10, wherein the aft attachment (10) is secured to the engine (3) via duplicated clevises.

## Patentansprüche

1. Triebwerkbefestigung (10) für ein Luftfahrzeug zur Anbringung zwischen einem Triebwerk (3) und einem Aufhängungssystem (6) dieses Triebwerks, umfassend eine erste Befestigungsvorrichtung (14), die zur schlüssige Verbindung mit dem System (6) dient und zwei Arme (16a, 16b) aufweiset, die jeweils mit vier gegenüberliegenden Verankerungsöffnungen ausgestattet sind, und zwei Schwingarme (12, 12'), wobei die beiden Schwingarme jeweils drei Öffnungen umfassen, wobei zwei der Öffnungen (22, 24) jedes Schwingarms (12) zur Befestigung durch Verbindungsachsen (18) an der ersten Befestigungsvorrichtung (14) über deren Verankerungsöffnungen dienen und die dritte Öffnung (26) zur schlüssigen Verbindung lauf der Ebene einer Gabelbefestigung des Triebwerks dient, wobei eine der Öffnungen (24'), die zur Befestigung an der ersten Befestigungsvorrichtung (14) dient, nicht beansprucht wird, solange die fünf anderen Öffnungen die gesamte Belastung bei normaler Funktion tragen, wobei jeder Schwingarm (12, 12') eine duale Struktur aufweist, die aus zwei Teilen (12a, 12b) identischer Form besteht, die in einer zu den Öffnungen (22, 24, 26) orthogonalen Richtung miteinander verbunden sind.

2. Befestigung nach Anspruch 1, wobei jeder Arm (16a, 16b) der ersten Vorrichtung (14) nur vier Öffnungen aufweist.

3. Befestigung nach einem der Ansprüche 1 bis 2, wobei die vier Öffnungen von jedem Arm (16a, 16b) der ersten Vorrichtung (14) geradlinig ausgerichtet sind.

4. Befestigung nach einem der Ansprüche 1 bis 3, wobei das durch die drei Öffnungen (22, 24, 26) jedes Schwingarms gebildete Dreieck gleichschenkelig ist.

5. Befestigung nach einem der Ansprüche 1 bis 4, die ferner vier Verbindungsachsen (18) umfasst, die die zwei Schwingarme (12, 12') zwischen den Armen (16a, 16b) der ersten Vorrichtung (14) schlüssig verbinden.

6. Befestigung nach einem der Ansprüche 1 bis 5, die ferner Verbindungsachsen (20, 30) umfasst, die mit den dritten Öffnungen (26) zusammenwirken.

7. Befestigung nach Anspruch 6, wobei die Verbindungsachsen (20), die mit den dritten Öffnungen (26) zusammenwirken, von einer dualen Struktur sind, die zwei koaxiale Bereiche (20a, 20b) aufweist.

8. Befestigung nach Anspruch 7, wobei die Verbindungsachsen von dualer Struktur (30) zwischen den zwei Bereichen (30a, 30b) ein radiales Spiel aufweisen.

9. Befestigung nach einem der Ansprüche 5 bis 8, wobei die Verbindungsachsen (18, 20, 30) Gelenkachsen sind.

10. Triebwerkanordnung für ein Luftfahrzeug, umfassend ein Aufhängungssystem (6), ein Triebwerk (3), das mit dem System (6) über eine hintere Befestigung (10) nach einem der Ansprüche 5 bis 9 schlüssig verbunden ist.

11. Triebwerkanordnung nach Anspruch 10, wobei die hintere Befestigung (10) mit dem Triebwerk (3) über doppelte Gabelbefestigungen schlüssig verbunden ist.
